# EUROPEAN PATENT SPECIFICATION

(11) **EP 1 494 364 B1**
(45) Date of publication and mention of the grant of the patent: **18.04.2018**
(21) Application number: 03014856.3
(22) Date of filing: 30.06.2003
(51) Int. Cl.: H04B 1/20

(54) **Device for controlling audio data output**
Vorrichtung zur Audiodaten-Ausgangskontrolle
Circuit pour le contrôle de la sortie des données audio

(43) Date of publication of application: 05.01.2005
(73) Proprietor: Harman Becker Automotive Systems GmbH, 76307 Karlsbad (DE)
(72) Inventor: Brülle-Drews, Christian, 22159 Hamburg (DE)
(74) Representative: Grünecker Patent- und Rechtsanwälte PartG mbB

(56) References cited:
- DE-A- 10 057 261
- US-A- 4 435 845
- US-A- 5 661 811
- US-A1- 2003 103 634

## Description

The invention relates to a device for controlling audio data output, an information management system comprising the device for controlling audio data output and a method to control audio data output in order to improve the comfort of information management systems, in particular used in vehicles.

Today's cars become more and more equipped with extensive audio, video, communication and drivers' information systems. Those systems are capable of providing various kinds of information in an acoustic and optical way. Typical applications include navigation assistance, traffic information, telephone calls, status information about the car and also, of course, entertainment such as music, television and computer games.

The corresponding information is output via a screen and loudspeakers to the occupants of the car. When information from different audio sources is output simultaneously, such as, for example, an announcement of the navigation system together with the audio signals from a DVD which is running on a screen provided for the occupants of the back seat, it is necessary to weight the audio signals such, that the amplitude of the audio signal coming from the DVD player is lowered with respect to the amplitude of the audio signal from the navigation system or the DVD is signal is even faded out, so that the important navigation message can be clearly heard by the driver.

By reducing the volume or fading out of the audio signal the comfort of use for the persons in the car watching the DVD is greatly reduced, as they are actually not interested in the announcements of the navigation system. It is therefore the object of the present invention to provide an information management system, wherein the users selectively receive those audio signals that they are interested in or that they need.

US patent 5 661 811 discloses an audio system comprising switches under microprocessor control for coupling the selected media to front speakers, rear speakers or headphones. The audio system has separate front and rear controls, but with front dominance, so that when a medium is selected by the front control, the rear control may also select the same medium, but it may not exercise any control over that medium.

US patent 4 435 845 discloses an automobile radio-cassette combination, comprising an announcement decoder, a switching network and a switching logic to generate switching signals which route the various programs over selected paths. Document US 2003/103634 A1 discloses a car audio system. The sought object is achieved by the invention as defined in the appended claims. A device for controlling audio data output is provided, comprising at least one data input interface for receiving input data streams from at least two different information sources, at least two audio output channels for outputting data, and a decision means for automatically determining for each input data stream to which of the at least two audio output channels the corresponding input data is directed, depending on at least one predetermined criterion. By providing the device for controlling audio data output, it becomes possible to selectively output audio information depending on the different end users. This means that information coming from a first information source can, as an example, be output to only one end user, whereas the information coming from a second information source could be output to all end users. Thus the first user can receive all the necessary information, whereas the other users which might not be interested in the information from the first information source, can continue to listen to the information from the second information source. Each information source delivers its own input data stream containing information. It is not meant that input data stream means the total data resulting as a combination of all the data coming from the various information sources. It should also be noted that one device may be the source of several different information sources. As an example, a car radio could be mentioned which outputs radio programmes, such as music or news programmes, representing one information source and also outputs traffic information which could be considered as a second information source.

A preferred embodiment of the device for controlling audio data output can comprise exactly one data input interface. In this case the input data streams from the different information sources, which might come from one or more data input devices, are multiplexed together prior to entering the device for controlling audio data output. Thus only one data input interface is needed, independently of the amount of different data providing sources. The device for controlling audio data output is designed such that the device is capable of demultiplexing the incoming data streams into the original data streams coming from the various information sources.

In another preferred embodiment, the device can comprise exactly as many input interfaces as different information sources. In this case, no multiplexing of the incoming data streams outside of the device for controlling audio data output would be needed, as each information source has its own input interface. Accordingly, also no internal demultiplexing is necessary to take place, making the device less complex.

In a further variant the device can comprise more than one data input interface but less data interfaces than different information sources. In this case, prior to interfacing the device for controlling audio data output, some of the information sources could be combined, for example data streams containing pure audio signals such as, for example, coming from a compact cassette (CC) or a compact disk (CD) player. A second interface could be provided for video signals, coming from a television or a digital versatile disk (DVD) player. Further interfaces could be reserved for other applications like a radio, a navigation system, an onboard computer, a telephone or microphones.

According to an advantageous embodiment, the device for controlling audio data output can further comprise an audio data mixing means for mixing input data streams from different information sources which are directed to the same audio output channel. The audio mixing means provides the possibility that more than one data stream is output at the same time, for example, music from the CD player together with traffic information or an advice from the navigation system.

In a particular advantageous embodiment, the device for controlling audio data output can comprise a weighting means for weighting the amplitudes of audio signals, corresponding to data streams from each of the information sources which are directed to the same audio output channel, according to at least one predetermined criterion. Depending on the relative importance of the information source, it is therefore possible to adjust the relative volumes between the data streams, containing information from the different information sources. As an example, audio signals from a CD player or the radio can be lowered, whereas traffic information or advice from the navigation system could be output with a higher volume to capture the attention of the driver. The importance of an information source can thereby be preset in the device for controlling audio data output, e.g. in an internal memory of the device, and also manually adjusted by a user of such a device.

In a further variant, the device can comprise a filtering means for filtering the input data streams according to at least one predetermined criterion. In the case that one information source provides more input data than is actually necessary, the filtering means has the advantage that unnecessary input data streams can be filtered out. An application of this feature will be described below.

In addition, the invention provides an information management system comprising the device for controlling audio data output as described above, at least two different information sources providing input data streams interfacing the at least one data input interface, and at least two audio output means interfacing the at least two audio output channels.

This information management system is therefore capable of selectively providing the different users with the information they need or they want to receive. Thereby the comfort of the use of the information management system is further enhanced.

According to a further embodiment, the information sources of the information management system can comprise at least one of an entertainment information source, in particular a television device, and/or a radio device, and/or a compact cassette (CC) playing device, and/or a compact disk (CD) playing device, and/or a super audio compact disk (SACD) playing device, and/or a digital versatile disk (DVD) playing device and/or a MPEG audio layer 3 (MP3) playing device, and/or a personal computer, and/or a playing console, and/or a telephone and a service information source, in particular a navigation system and/or an onboard computer and/or at least one microphone and/or an electronic parking assistance device and/or a direction indicator and/or devices providing warning signals. As mentioned earlier, some of the listed devices can comprise more than one information source. Examples are the radio device, outputting entertainment via music or news programmes and as a different information source providing traffic information, or the telephone which can be used for normal communication or eventually receive other kinds of information such as navigation assistance or traffic information via SMS messages. Service information sources provide information that are useful for the driver so that he can safely and quickly reach his destination. To transform non-audio service information into audio signals the information management system may comprise a text-to-speech (TTS) device providing synthetic voice output or a speech dialog system (SDS).

In a further preferred embodiment the output means of the information management system can comprise at least one loudspeaker and/or at least one headset. In the case of the application of the information management system in a car or other vehicle, several advantageous examples may be given. Firstly, one headset and one or more loudspeaker are provided. In this case the driver can use the headset and receive information from the navigation system, traffic information from the radio device and/or status information about the car via the onboard computer. At the same time the driver can also enjoy entertainment from a CD player or a radio via the headset. The other occupants of the car can follow the entertainment programme they are interested in via the loudspeakers, without being disturbed by other additional information, they are not interested in. This thus greatly enhances the comfort for the users.

It is also a possibility to provide only loudspeakers. In this case, the loudspeaker closest to the driver receives the audio signals which contain the additional information from the navigation system, the traffic information or the onboard computer, whereas the loudspeakers which are closer to the other occupants of the car will only receive audio signals from the entertainment sources.

In a further variant there could be provided more than one headset. The driver still receives the traffic and navigation information via one headset and each other occupant of the car can choose the entertainment source or the information source he is interested in and will not disturb the other occupants of the car.

In the case that the driver is using a headset it is advantageous to also provide a microphone that is capturing the noise outside of the car, as a further information source. Relevant noise, such as signal horns, can then be filtered out and output to the headset of the driver, which will help in improving the security.

In a further variant the interface between the audio output channel and the headset of the information management system can be designed such as to allow wireless communication between the output channel and the headset. By doing so, no bothering cables are present thus further improving not only the comfort but also the safety of the use of the information management system.

In a further preferred embodiment the at least one headset of the information management system can comprise a ring circuit being capable of creating a magnetic field. In the case that the user of the headset carries a hearing apparatus, being equipped with a telecoil, background noise can be reduced, by switching the hearing aid from normal use to telecoil use, whereby the telecoil receives the signals being emitted by the ring circuit. Thus the person carrying the hearing apparatus can receive the actual information with a better quality. Therefore the information management system according to the invention can provide, especially for people with hearing difficulties, an enhanced quality of the information output.

The application of the inventive device for controlling audio data output and/or the information management system is especially advantageous in the case that those apparatus are provided in a vehicle, in particular a car.

The application in a vehicle can be especially advantageous when at least one microphone is placed such that the at least one microphone receives acoustic signals from outside the vehicle. As mentioned earlier, this microphone can then provide data stream to the device for controlling audio data output in which the filtering means can filter out the relevant signals, such as a signal horn, and the relevant information is then directed towards the audio output channel delivering the information for the driver.

In addition, the invention provides a method to control audio data output comprising the steps of providing input data streams from at least two differing information sources, and automatically determining for each of the input data streams which of the provided at least two audio output channels is/are used to output information contained in the input data streams.

Thus it becomes possible to selectively output audio information depending on the different end users. This means that information coming from a first information source can, as an example, be output to only one end user, whereas the information coming from a second information source could be output to all end users. Consequently the first user can receive all the necessary information, whereas the other users which might not be interested in the information from the first information source, can continue to listen to the information from the second information source.

In a further preferred embodiment the method can further comprise the step of mixing input data streams which are to be output via the same audio output channel. Thus more than one data stream can be output at the same time, for example, music from the CD player together with traffic information or an advice from the navigation system.

In a further variant the method can further comprise, prior to the mixing step, the step of weighting the amplitude of to be mixed audio signals, corresponding to each of the parallel input data streams which are to be output via the same audio output channel. Depending on the relative importance of the information source, it is therefore possible to adjust the relative volumes between the data streams, containing information from the different information sources. The importance of an information source can thereby be preset in the device for controlling audio data output, e.g. in an internal memory of the device, and also manually adjusted by a user of such a device.

In a further preferred embodiment the method can further comprise, prior to the automatically determining step, a step of filtering the input data streams according to predetermined criterion. In the case that one information source provides more input data than is actually necessary, the filtering means has the advantage that unnecessary input data streams can be filtered out. An advantageous example of the filtering step will be given further below.

Preferably the method can comprise a step of using a headset as one of the at least two audio output channels. In this case the driver can use the headset and receive information from the navigation system, traffic information from the radio device and/or status information about the car via the onboard computer. At the same time the driver can also enjoy entertainment from a CD player or a radio via the headset. The other occupants of the car can follow the entertainment programme they are interested in via the loudspeakers, without being disturbed by other additional information, they are not interested in. This thus greatly enhances the comfort for the users.

In a further variant the information which has been determined to be output via the headset can be output using a ring circuit. In the case that the user of the headset carries a hearing apparatus, being equipped with a telecoil, background noise can be reduced, by switching the hearing aid from normal use to telecoil use. The telecoil detects the signals emitted from the ring circuit and the person carrying the hearing apparatus will receive the information with a better quality. Thus especially for people with hearing difficulties, an enhanced quality of the information output can be provided.

Preferably the input data streams of the method comprise navigation assistance data, traffic information data, communication data in particular telephone calls, fax and/or electronic mail, and/or data from entertainment electronics, in particular from a radio device and/or a television device and/or a compact cassette (CC) player and/or a compact disk (CD) player and/or super audio compact disk (SACD) player and/or a digital versatile disk (DVD) player and or a MP3 player and/or a game console and/or audio signals captured by a microphone.

In a further preferred embodiment audio signals captured by the microphone are output via the headset only, in particular after filtering the audio signals captured by the microphone according to a predetermined criterion. Preferably the microphone is capturing noise outside of a car, and is therefore providing further information, which is of importance to the driver, which at any time has to be able to detect possible dangers. Ideally relevant noise, such as warnings from a signal horn, should be filtered out and output to the headset of the driver.

The invention further provides a computer programme product directly loadable into the internal memory of a digital computer comprising software code portions for performing the steps of one of the methods described above.

The invention also provides a computer programme product stored on a medium readable by computer systems comprising computer readable programme means for causing a computer to perform the steps of one of the previously described methods.

In the following, examples of the inventive device for controlling audio data output, the information management system and the inventive method are described with respect to the Figures:
Fig. 1 shows a first embodiment of the inventive device for controlling audio data output, wherein the device comprises exactly one data input interface and a first embodiment of the data management system,
Fig. 2 shows a flow chart illustrating the functioning of the first embodiment,
Fig. 3 shows a second embodiment of the device for controlling audio data output, wherein the device comprises exactly as many input interfaces as different information sources, and a second embodiment of the data management system,
Fig. 4 shows a third example of the device for controlling audio data output wherein the device comprises more than one data input interface but less data input interfaces than different information sources, and a third embodiment of the data management system, and
Fig. 5 shows an example of an information management system being built in a vehicle.

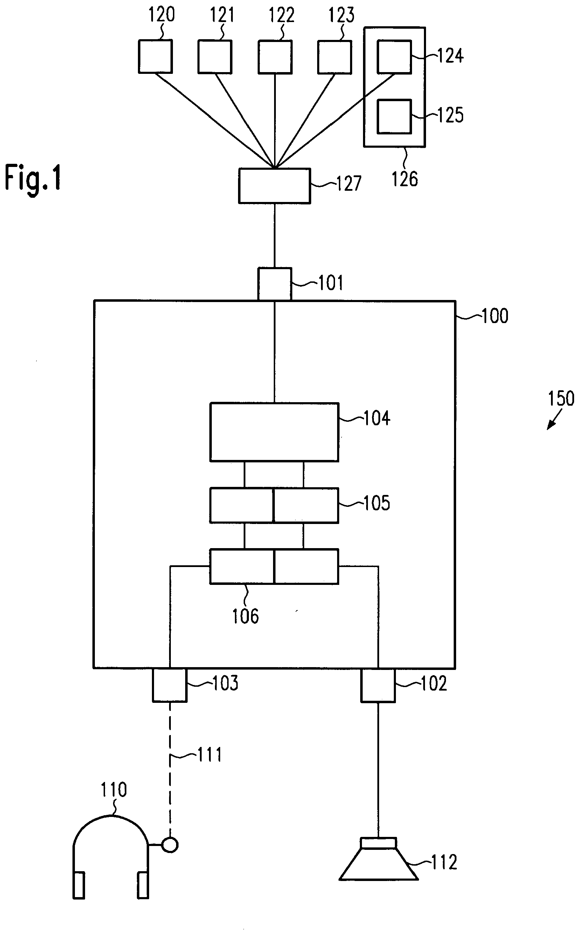

Fig. 1 shows a first embodiment of the inventive device for controlling audio data output 100. The device for controlling audio data output 100 comprises one data input interface 101, two audio output channels 102, 103 and a decision means 104. The device 100 further comprises a weighting means 105 and an audio data mixing means 106.

A headset 110 is connected to the audio output channel 103 via a wireless communication line 111. Reference numeral 112 depicts a loudspeaker that could also represent a whole loudspeaker system containing more than one loudspeaker. The loudspeaker 112 is in connection with the audio output channel 102.

Reference numerals 120 - 125 represent different information sources. As explained above, those information sources 120 - 125 do not necessarily each correspond to a data outputting device. Actually, reference numeral 126 corresponds to one data outputting device which comprises two information sources 124 and 125. One example is the car radio, where one information source comprises music and news programmes and the other information source delivers traffic information. The information sources 120 - 125 can comprise, for example, a television device, a radio device, a compact cassette (CC) device and/or a compact disk (CD) device and/or a super audio compact disk (SACD) device and/or digital versatile disk (DVD) device. Other examples are a personal computer, a playing console, a telephone, mobile or fixed, a navigation system or an onboard computer. Furthermore, also microphones are suitable information sources. In the illustrated embodiment, six information sources are shown, but this number may vary depending on the application. As the device for controlling audio data output 100 only has one data input interface 101 the various data streams coming from the different information sources 120 - 126 have to be combined prior to entering the device for controlling audio data output 100. This happens at the data streams combining section 127 where the various data streams are multiplexed together to form one multiplexed data stream. This data stream can then enter the device for controlling audio data output 100 via the data input interface 101.

All components together represent a first embodiment of an information management system 150, according to the invention.

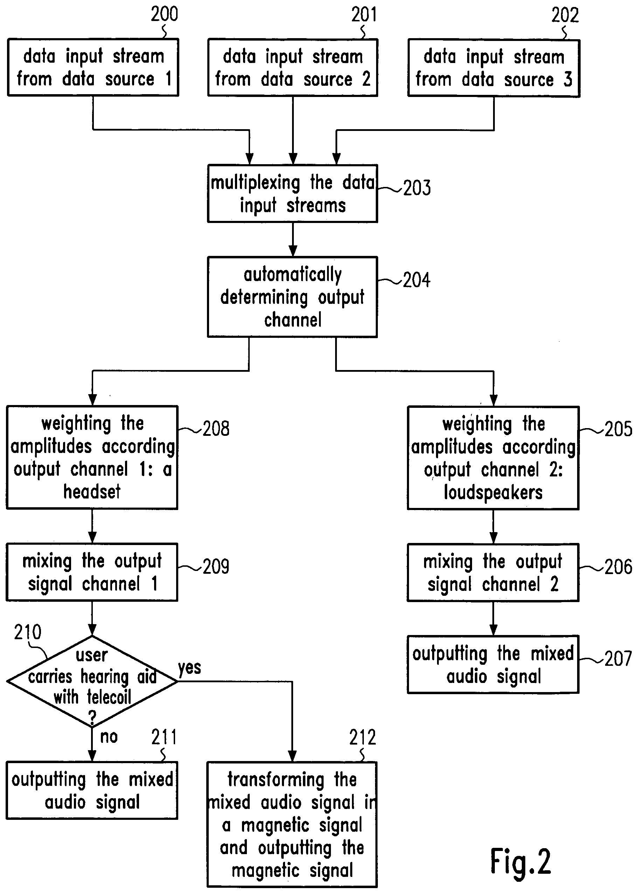

Fig. 2 shows a functional diagram illustrating one example of how the information management system 150 and the device for controlling audio data output 100, illustrated in Fig. 1, function.

Data input streams are generated from three different data sources as shown in process steps 201 and 202. For example, data source one could be a navigation system, data source two a car radio, as earlier explained representing two different information sources, music and news programmes as well as traffic information and the third data source could be a mobile telephone. Those data sources thus correspond to devices 120 - 125 as illustrated in Fig. 1. In process step 203 the data input streams from the three data sources are multiplexed together in the data stream combining section 127, as shown in Fig. 1. During multiplexing the data input streams from the three different data sources are put into a series of subsequent sequences, whereby the origin of each sequence can later be identified by the device for controlling audio data input 100. The multiplexed data input stream then enters the device for controlling audio data output 100 via the data input interface 101.

The decision means 104 then automatically determines which data sequence in the multiplexed data input stream is going to be directed to which of the two audio output channels 102 and 103 (process step 204). In this example the information coming from the navigation system is directed to the audio output channel 103 being in connection with the headset 110. The data coming from the telephone, such as an incoming telephone call, is also only directed to the audio output 103. Further, the traffic information coming from the radio device is also exclusively directed towards audio output channel 103. However, the music and news programmes also coming from the radio device are directed to both audio output channels 102 and 103. Of course it is also foreseen that at any time the users of the information management system 150 can decide how the information coming from the different information sources is directed to the different audio output channels. For example the configuration of the decision means could be switched such that incoming telephone calls are output on both the headset and the loudspeakers.

The data streams that are directed to the loudspeakers then enter the weighting means 105. The corresponding process step 205 then consists in weighting the amplitudes of the audio signals that are going to be output at the same time by the same audio output channel. For example, if the music from the radio and a telephone communication is going to be output via the loudspeakers, the weighting means can lower the amplitude of the signal corresponding to the music programme from the radio while keeping the amplitude of the signal corresponding to the telephone communication constant. It is of course also possible to completely fade out one of the signals, if wished. In the following process step 206 the audio signals that are going to be output via the loudspeakers are mixed by the mixing means 106, so that the user can hear the signals from the different data sources according their relative amplitudes. The mixed signals are then output via the loudspeaker 112 in step 207.

In step 208 the amplitudes of the signals directed to the headset 110 are weighted. Those weighted signals are then mixed in step 209. In step 210 the information management system 150 then checks whether the user of the headset is carrying a hearing aid comprising a telecoil. If this is not the case the mixed audio signal is output via the headset 110. If, however, the user has declared to the information management system 150 that he is carrying a hearing aid with a telecoil, wherein this declaration can for example be done by pressing a certain button on the man machine interface or via a speech recognition system, then step 212 consists of transforming the mixed audio signal into a magnetic signal by a ring circuit, being part of the headset 110. By doing so, background noise can be suppressed to a large extent and consequently a person with hearing difficulties can better understand the provided information.

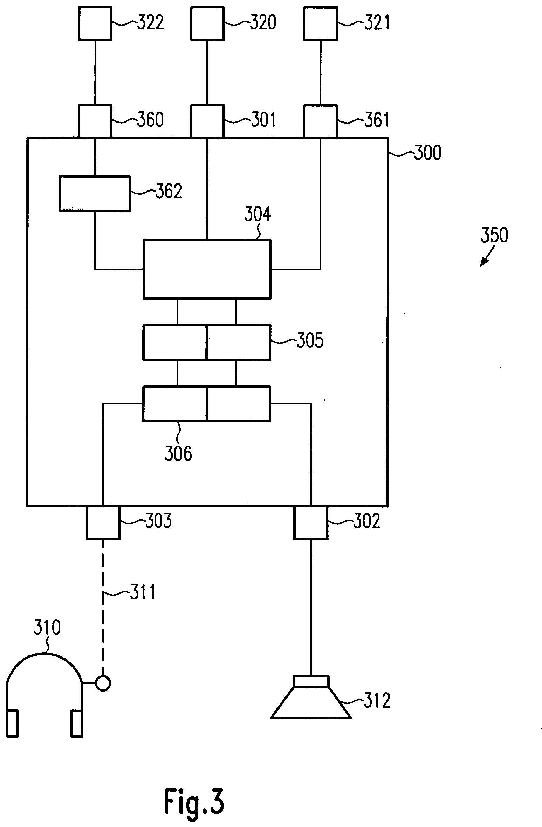

Fig. 3 corresponds to a second embodiment of the device controlling audio data output 300 and also illustrates a second embodiment of an information management system 350 according to the invention. Reference numerals in Fig. 3 that have the same tens and units as the reference numerals in Fig. 1 correspond to the same component and therefore a further description of these components will not be given. The advantages and features of those components are thus as already described with respect to Fig. 1. Only different components, characterized by different tens and units in the reference numerals, will be further explained.

The main difference of the second embodiment with respect to the first embodiment lies in the fact that the device for controlling audio data output 300 comprises exactly as many input interfaces 301, 360, 361 as different information sources 320, 321 and 322. Thus three data streams can enter the device for controlling audio data output 300 in parallel. Furthermore, the device for controlling audio data output 300 comprises a filtering means 362 for filtering input data streams coming, in this example, from the data input interface 360. As a variant it is also possible to provide filtering means for each data input interface 301, 360, 361.

The filtering means 362 is especially advantageous for the case that the information source 322 corresponds to a microphone. In the application of the information management system 350 in a car, such a microphone, corresponding to the information source 322, can be placed outside the vehicle. This microphone thus can record all the noise present outside the vehicle, including relevant noise such as signal horns, but also irrelevant noise like the noise coming from the motor or the tyres which are rolling over the road. The irrelevant noise is not carrying any interesting information for the user and should therefore be filtered out which can be done by the filtering means 362. Thus the user will only receive the important noise from outside the car which informs him of eventual dangers.

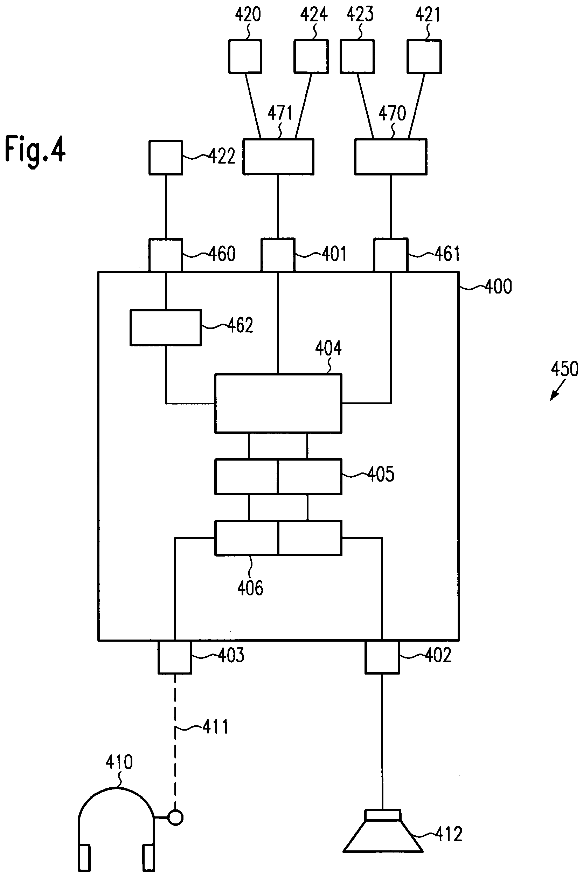

Fig. 4 shows a third embodiment of a device for controlling audio data output 400 according to the invention, as well as a third embodiment of an information management system 450 according to the invention. Again reference numerals having the same tens and units as reference numerals in Figs. 1 and 3 correspond to the same components and the description thereof will be omitted. The advantages and features of those components are thus as already described with respect to Figs. 1 and 3.

The difference of the third embodiment with respect to the embodiments 1 and 2 illustrated in Figs. 1 and 3 is that more than one data input interface 401, 460, 461 is present but that more different information sources 420 - 424 than data input interfaces 401, 460, 461 are provided by the information management system 450. In this example, information sources 421 and 423 may represent information sources that provide video signals such as a television or a DVD device. Via a switch 470 the user can decide which of the information sources he wants to use. Similarly, all audio sources like a radio, a compact cassette player or a CD player or a super audio CD player, represented by information sources 420 and 424, might have one corresponding data input interface 401. Again the user could choose the information source via a switch 471.

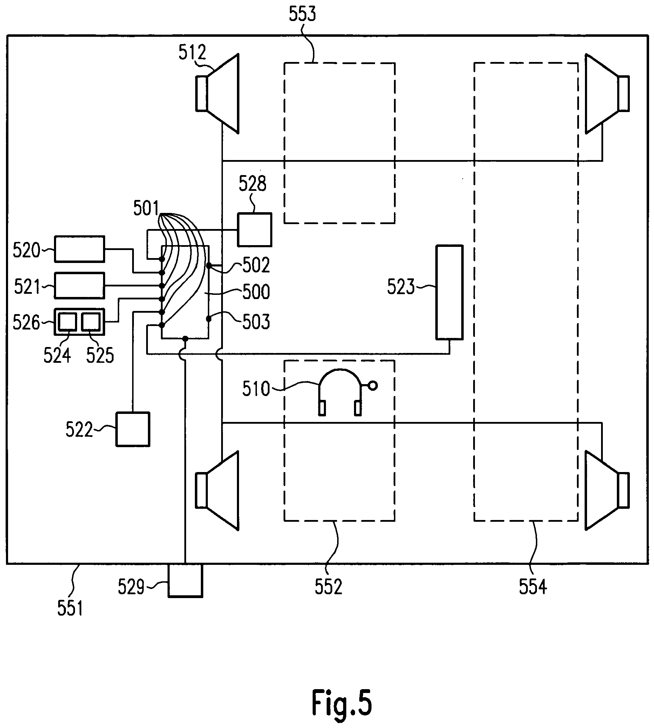

Fig. 5 shows an example of an information management system 550 being built in a vehicle 551. Schematically drawn in dotted lines are the driver's position 552, the co-driver's position 553 and the back seat 554. The components of the information management system 550, which have reference numerals that have tens and units corresponding to reference numerals in Figs. 1, 3 or 4 again correspond to the same components and will not be further explained.

The information management system 550 comprises a device for controlling data output 500 having seven data input interfaces 501, one audio output channel 502 being connected to four loudspeakers 512 and one audio output channel 503 being in wireless connection with the headset 510.

A navigation system 520 is connected to one of the data input interfaces 501. A CD player 521 is also connected to another one of the data input interfaces 501. In addition a radio device 526 comprising two data sources, the radio programme data source 524 and the traffic information data source 525, is connected to a third data input interface 501. Furthermore, the information management system comprises as information sources an onboard computer 522 and a DVD player 523, which in this embodiment is provided for the occupants of the back seat 554. In addition, the user of the information management system has the possibility to connect a telephone 528 to the device for controlling audio data output 500. As an alternative, the user may also be able to connect a personal computer instead of or in addition to the telephone 528. Finally, the information management system 550 also comprises a microphone 529, being position outside of the vehicle 551.

The illustrated configuration of the management system 550 is of course only one possibility. Further information sources may eventually be provided and it is also possible to provide more than just one headset, for example one further headset for the co-driver and/or two or three further headsets for the occupants of the back seat 554. In a further variant it is also possible that each loudspeaker has its own audio output interface.

The design of the device for controlling audio data output 500 illustrated in Fig. 5 corresponds to the second embodiment 300 as illustrated in Fig. 3. In further variants a device for controlling the audio data output according to the first embodiment as illustrated in Fig. 1 or the third embodiment as illustrated in Fig. 4 could be employed.

As a further variant the information management system 550 may comprise more than one microphone placed outside of the vehicle in order to further improve the capacity of receiving all relevant noise from outside the car. It may also be a possibility to provide a microphone inside the vehicle which may be used to improve the communication between the occupants or be used for controlling the amplitude of the audio signals output as a function of background noise level inside the car, detected by the microphones.

As an example, the information management system 550 is configured as follows. The loudspeakers 512 output audio signals coming from the entertainment sources CD player 521, DVD player 523 and the radio programme information source 524 of the radio device 526. Thus the occupants of the co-driver's seat and/or the back seat can enjoy the chosen entertainment programmes without being annoyed by announcements of the other information providing sources. The driver, using the headset 510, will receive navigation information from the navigation system 520, traffic information from information source 525 of the radio 526, telephone calls via the telephone 528 and in order to ensure the security also relevant information from the outside microphone 529. In parallel the driver can of course also receive audio signals from the entertainment sources such as the CD player 521 or the radio programme information source 524 of the radio 526 and eventually also the audio signals from the DVD device 523.

It is at any time possible for the users to reconfigure the information management system 550 to change the attribution of the different information data sources to the different audio output channels. For example the occupants, other than the driver, might also be interested in receiving the telephone calls coming from the telephone 528.

## Claims

1. Device for controlling audio data output (300; 400; 500) of an information management system (350; 450; 550) in a vehicle, comprising
- a first data input interface (360; 460) and at least one second data input interface (301, 361; 401, 461; 501) for receiving input data streams from at least two different information sources (320-322; 420-424; 520-526, 528, 529);
- at least two audio output channels (302, 303; 402, 403; 502, 503) for outputting data;
- a decision means (304; 404) for automatically determining for each input data stream to which of the at least two audio output channels (302, 303; 402, 403; 502, 503) the corresponding input data is directed, depending on at least one predetermined criterion;
- a weighting means (305; 405) for weighting the amplitudes of audio signals, corresponding to the input data streams from each of the information sources (320-322; 420-424; 520-526, 528, 529) determined by the decision means to be directed to the same audio output channel (302, 303; 402, 403; 502, 503), according to at least one predetermined criterion; and
- an audio data mixing means (306; 406) for mixing the weighted input data streams which are directed to the same audio output channel (302, 303; 402, 403; 502, 503);
**characterized by**
- at least one microphone (322; 422; 529) wherein the at least one microphone (322; 422; 529) is placed to receive acoustic signals from outside the vehicle (551) and adapted to provide at least one input data stream to the first data input interface (360; 460); and
- filtering means (362; 462), wherein the filtering means (362; 462) is adapted to filter the at least one input data stream supplied by the at least one microphone (322; 422; 529), according to at least one predetermined criterion, prior to providing the at least one input data stream to the decision means (304; 404).

2. Device according to claim 1 comprising exactly as many input interfaces (301, 360, 361) as different information sources (320-322; 520-526, 528, 529).

3. Device according to claim 1 comprising more than one data input interface (401, 460, 461) but less data input interfaces (401, 460, 461) than different information sources (420-424).

4. Information management system (350; 450; 550) comprising:
- the device for controlling audio data output according to one of claims 1 to 3;
- at least two different information sources (120-126) providing input data streams interfacing the at least one data input interface (101);
- at least two audio output means (110, 112) interfacing the at least two audio output channels.

5. Information management system (350; 450; 550) according to claim 4, wherein the information sources comprise at least one of
an entertainment information source, in particular devices to replay analog or digital audio signals including a television device, and/or a radio device (526), and/or a compact cassette playing device, and/or a compact disc playing device (521), and/or a super audio compact disc playing device, and/or a digital versatile disc playing device (523), and or an MPEG audio layer 3 playing device, and/or a personal computer, and/or a playing console, and/or a telephone (528),
and
a service information source, in particular a navigation system, and/or an onboard computer, and/or at least one microphone (529), and/or an electronic parking assistance device, and/or a direction indicator, and/or devices providing warning signals.

6. Information management system (350; 450; 550) according to one of claims 4 to 5, wherein the output means comprise at least one loudspeaker (312; 412; 512) and/or at least one headset (310; 410; 510).

7. Information management system (350; 450; 550) according to claim 6, wherein the interface between the audio output channel (303; 403; 503) and the at least one headset (310; 410; 510) is designed such as to allow wireless communication between the output channel (303; 403; 503) and the headset (310; 410; 510).

8. Information management system (350; 450; 550) according to claim 6 or 7, wherein the at least one headset (310; 410; 510) comprises a ring circuit, being capable of creating a magnetic field.

9. Vehicle comprising the device for controlling audio data output/the information management system according to one of claims 1 to 8.

10. Method to control audio data output comprising the steps of
- providing input data streams from at least two different information sources (320-322; 420-424; 520-526, 528, 529) and at least two audio output channels (302, 303; 402, 403; 502, 503).
- automatically determining for each of the input data streams which of the provided at least two audio output channels (302, 303; 402 403; 502, 503) is/are used, to output information contained in the input data streams;
- mixing input data streams which are to be output via the same audio output channel (302, 303; 402, 403; 502, 503); and
- prior to the mixing step, weighting the amplitude of to be mixed audio signals, corresponding to each of the input data streams which are to be output via the same audio output channel (302, 303; 402, 403; 502, 503);
**characterized by**
- providing at least one of the input data streams from at least one microphone (322; 422; 529) placed to receive acoustic signals from outside the vehicle (551); and
- filtering the at least one of the input data streams from the at least one microphone prior to the automatically determining step according to a predetermined criterion.

11. Method according to claim 10 further comprising a step of connecting a headset (310; 410; 510) to one of the at least two audio output channels.

12. Method according to claim 11 wherein the information which has been determined to be output via the headset (310; 410; 510) is output using a ring circuit.

13. Method according to one of the claims 10 to 12 wherein the input data streams comprise navigation assistance data, and/or traffic information data, and/or communication data, in particular telephone calls, fax, and/or electronic mail, and/or data from entertainment electronics, in particular from a radio device (526), and/or a television, and/or a CD/DVD player (521, 523), and/or a compact cassette player, and/or a MP3 player, and/or a game console, and/or a board computer, and/or audio signals captured by at least one microphone (322; 422; 529).

14. Method according to claim 13 wherein audio signals captured by the microphone are output via the headset (310; 410; 510) only, in particular after filtering the audio signals captured by the microphone (322; 422; 529) according to a predetermined criterion.

15. Computer program product directly loadable into an internal memory of a digital computer, comprising software code portions for performing the steps of the method according to one of the claims 10 to 14.

16. Computer program product stored on a medium readable by a computer system comprising computer readable program means for causing a computer to perform the steps of the method according to one of the claims 10 to 14.

## Patentansprüche

1. Vorrichtung zur Audiodaten-Ausgangskontrolle (300; 400; 500) eines Informationsverwaltungssystems (350; 450; 550) in einem Fahrzeug, umfassend
- eine erste Dateneingangsschnittstelle (360; 460) und mindestens eine zweite Dateneingangsschnittstelle (301, 361; 401, 461; 501) zum Empfangen von Eingangsdatenströmen von mindestens zwei verschiedenen Informationsquellen (320-322; 420-424; 520-526, 528, 529);
- mindestens zwei Audioausgangskanäle (302, 303; 402, 403; 502, 503) für den Datenausgang;
- ein Entscheidungsmittel (304; 404), um für jeden Eingangsdatenstrom automatisch zu bestimmen, an welchen der mindestens zwei Audioausgangskanäle (302, 303; 402, 403; 502, 503) die entsprechenden Eingangsdaten gerichtet sind, abhängig von mindestens einem zuvor festgelegten Kriterium;
- ein Gewichtungsmittel (305; 405) zum Gewichten der Amplituden von Audiosignalen, entsprechend der Eingangsdatenströme von jeder der Informationsquellen (320-322; 420-424; 520-526, 528, 529), bei denen von dem Entscheidungsmittel bestimmt wurde, dass sie an denselben Audioausgangskanal (302, 303; 402, 403; 502, 503) zu richten sind, abhängig von mindestens einem zuvor festgelegten Kriterium; und
- ein Audiodatenmischmittel (306; 406) zum Mischen der gewichteten Eingangsdatenströme, die an denselben Audioausgangskanal (302, 303; 402, 403; 502, 503) gerichtet sind;
**gekennzeichnet durch**
- mindestens ein Mikrofon (322; 422; 529), wobei das mindestens eine Mikrofon (322; 422; 529) platziert ist, um akustische Signale von außerhalb des Fahrzeugs (551) zu empfangen und ausgelegt ist, um der ersten Dateneingangsschnittstelle (360; 460) mindestens einen Eingangsdatenstrom bereitzustellen; und
- Filtermittel (362; 462), wobei das Filtermittel (362; 462) ausgelegt ist, um den von dem mindestens einen Mikrofon (322; 422; 529) gelieferten Eingangsdatenstrom zu filtern, gemäß mindestens einem zuvor festgelegten Kriterium, bevor dem Entscheidungsmittel (304; 404) der mindestens eine Eingangsdatenstrom bereitgestellt wird.

2. Vorrichtung nach Anspruch 1, umfassend genauso viele Eingangsschnittstellen (301, 360, 361) wie verschiedene Informationsquellen (320-322; 420-424; 520-526, 528, 529).

3. Vorrichtung nach Anspruch 1, umfassend mehr als eine Dateneingangsschnittstelle (401, 460, 461), aber weniger Dateneingangsschnittstellen (401, 460, 461) als verschiedene Informationsquellen (420-424).

4. Informationsverwaltungssystem (350; 450; 550), umfassend:
- die Vorrichtung zur Audiodaten-Ausgangskontrolle nach einem der Ansprüche 1 bis 3;
- mindestens zwei verschiedene Informationsquellen (120-126), die Eingangsdatenströme bereitstellen, die sich mit der mindestens einen Dateneingangsschnittstelle (101) verbinden;
- mindestens zwei Audioausgangsmittel (110, 112), die sich mit den mindestens zwei Audioausgangskanälen verbinden.

5. Informationsverwaltungssystem (350; 450; 550) nach Anspruch 4, wobei die Informationsquelle mindestens eines von einer Unterhaltungsinformationsquelle, insbesondere Vorrichtungen zur Wiedergabe von analogen oder digitalen Audiosignalen, darunter ein Fernsehgerät und/oder ein Radiogerät (526) und/oder eine Kompaktkassettenabspielvorrichtung und/oder eine Compact-Disc-Abspielvorrichtung (521) und/oder eine Super-Audio-Compact-Disc-Abspielvorrichtung und/oder eine Digital-Versatile-Disc-Abspielvorrichtung (523) und/oder eine MPEG-Audio-Layer-3-Abspielvorrichtung und/oder einen Personal Computer und/oder eine Spielkonsole und/oder ein Telefon (528) und
eine Service-Informationsquelle, insbesondere ein Navigationssystem und/oder einen Bordcomputer und/oder mindestens ein Mikrofon (529) und/oder eine elektronische Parkassistenzvorrichtung und/oder eine Richtungsanzeige und/oder Vorrichtungen, die Warnsignale bereitstellen, umfasst.

6. Informationsverwaltungssystem (350; 450; 550) nach einem der Ansprüche 4 bis 5, wobei die Ausgangsmittel mindestens einen Lautsprecher (312; 412; 512) und/oder mindestens ein Headset (310; 410; 510) umfassen.

7. Informationsverwaltungssystem (350; 450; 550) nach Anspruch 6, wobei die Schnittstelle zwischen dem Audioausgangskanal (303; 403; 503) und dem mindestens einen Headset (310; 410; 510) gestaltet ist, um drahtlose Kommunikation zwischen dem Ausgangskanal (303; 403; 503) und dem Headset (310; 410; 510) zu ermöglichen.

8. Informationsverwaltungssystem (350; 450; 550) nach Anspruch 6 oder 7, wobei das mindestens eine Headset (310; 410; 510) eine Ringschaltung umfasst, die dazu in der Lage ist, ein magnetisches Feld zu erzeugen.

9. Fahrzeug, umfassend die Vorrichtung zur Audiodaten-Ausgangskontrolle/das Informationsverwaltungssystem nach einem der Ansprüche 1 bis 8.

10. Verfahren zur Audiodaten-Ausgangskontrolle, umfassend die folgenden Schritte:
- Bereitstellen von Eingangsdatenströmen von mindestens zwei verschiedenen Informationsquellen (320-322; 420-424; 520-526, 528, 529) und mindestens zwei Audioausgangskanälen (302, 303; 402, 403; 502, 503);
- automatisches Bestimmen für jeden der Eingangsdatenströme, welche(r) der bereitgestellten mindestens zwei Audioausgangskanäle (302, 303; 402, 403; 502; 503) verwendet wird/werden, um in den Eingangsdatenströmen enthaltene Informationen auszugeben;
- Mischen von Eingangsdatenströmen, die über denselben Audioausgangskanal (302, 303; 402, 403; 502, 503) auszugeben sind; und
- vor dem Mischschritt Gewichten der Amplitude der zu mischenden Audiosignale, entsprechend jedem der Eingangsdatenströme, die über denselben Audioausgangskanal (302, 303; 402, 403; 502, 503) auszugeben sind;
**gekennzeichnet durch**
- Bereitstellen von mindestens einem der Eingangsdatenströme von mindestens einem Mikrofon (322; 422; 529), das platziert ist, um akustische Signale von außerhalb des Fahrzeugs (551) zu empfangen; und
- Filtern des mindestens einen von den Eingangsdatenströmen von dem mindestens einen Mikrofon vor dem Schritt des automatischen Bestimmens gemäß einem zuvor festgelegten Kriterium.

11. Verfahren nach Anspruch 10, ferner umfassend einen Schritt des Verbindens eines Headsets (310; 410; 510) mit einem der mindestens zwei Audioausgangskanälen.

12. Verfahren nach Anspruch 11, wobei die Informationen, über die bestimmt worden ist, dass sie über das Headset (310; 410; 510) auszugeben sind, unter Verwendung einer Ringschaltung ausgegeben werden.

13. Verfahren nach einem der Ansprüche 10 bis 12, wobei die Eingangsdatenströme Navigationsassistenzdaten und/oder Verkehrsinformationsdaten und/oder Kommunikationsdaten, insbesondere Telefonanrufe, Fax und/oder elektronische Post und/oder Daten von Unterhaltungselektronik, insbesondere von einem Radiogerät (526) und/oder einem Fernseher und/oder einem CD-/DVD-Player (521, 523) und/oder einem Kompaktkassetten-Player und/oder einem MP3-Player und/oder einer Spielekonsole und/oder einem Bordcomputer und/oder Audiosignale, die von mindestens einem Mikrofon (322; 422; 529) erfasst werden, umfasst.

14. Verfahren nach Anspruch 13, wobei von dem Mikrofon erfasste Audiosignale ausschließlich über das Headset (310; 410; 510) ausgegeben werden, insbesondere nach dem Filtern der von dem Mikrofon (322; 422; 529) erfassten Audiosignale gemäß einem zuvor festgelegten Kriterium.

15. Computerprogrammprodukt, das direkt in einen internen Speicher eines Digitalcomputers ladbar ist, umfassend Softwarecodeabschnitte zum Durchführen der Schritte des Verfahrens nach einem der Ansprüche 10 bis 14.

16. Computerprogrammprodukt, das auf einem Medium gespeichert ist, das von einem Computersystem lesbar ist, umfassend computerlesbare Programmmittel, um zu bewirken, dass ein Computer die Schritte des Verfahrens nach einem der Ansprüche 10 bis 14 durchführt.

## Revendications

1. Dispositif pour le contrôle de la sortie de données audio (300 ; 400 ; 500) d'un système de gestion d'informations (350 ; 450 ; 550) dans un véhicule, comprenant
- une première interface d'entrée de données (360 ; 460) et au moins une deuxième interface d'entrée de données (301, 361 ; 401, 461 ; 501) pour recevoir des flux de données d'entrée à partir d'au moins deux sources d'informations différentes (320-322 ; 420-424 ; 520-526, 528, 529) ;
- au moins deux canaux de sortie audio (302, 303 ; 402, 403 ; 502, 503) pour délivrer des données en sortie ;
- un moyen de décision (304 ; 404) pour déterminer automatiquement pour chaque flux de données d'entrée vers lequel des au moins deux canaux de sortie audio (302, 303 ; 402, 403 ; 502, 503) les données d'entrée correspondantes sont dirigées, en fonction d'au moins un critère prédéterminé ;
- un moyen de pondération (305 ; 405) pour pondérer les amplitudes de signaux audio, correspondant aux flux de données d'entrée provenant de chacune des sources d'informations (320-322 ; 420-424 ; 520-526, 528, 529) déterminés par les moyens de décision comme étant dirigés vers le même canal de sortie audio (302, 303 ; 402, 403 ; 502, 503), en fonction d'au moins un critère prédéterminé ; et
- un moyen de mélange de données audio (306 ; 406) pour mélanger les flux de données d'entré pondérés qui sont dirigées vers le même canal de sortie audio (302, 303 ; 402, 403 ; 502, 503) ;
**caractérisé par**
- au moins un microphone (322 ; 422 ; 529) dans lequel l'au moins un microphone (322 ; 422 ; 529) est placé pour recevoir des signaux acoustiques provenant de l'extérieur du véhicule (551) et adaptés pour fournir au moins un flux de données d'entrée à la première interface d'entrée de données (360 ; 460) ; et
- un moyen de filtrage (362 ; 462), dans lequel le moyen de filtrage (362 ; 462) est adapté pour filtrer l'au moins un flux de données d'entrée délivré par l'au moins un microphone (322 ; 422 ; 529), en fonction d'au moins un critère prédéterminé, avant de fournir l'au moins un flux de données d'entrée aux moyens de décision (304 ; 404).

2. Dispositif selon la revendication 1, comprenant exactement autant d'interfaces d'entrée (301, 360, 361) que de sources d'informations différentes (320-322 ; 520-526, 528, 529).

3. Dispositif selon la revendication 1, comprenant plus d'une interface d'entrée de données (401, 460, 461) mais moins d'interfaces d'entrée de données (401, 460, 461) que de sources d'informations différentes (420-424).

4. Système de gestion d'informations (350 ; 450 ; 550) comprenant :
- le dispositif pour le contrôle de la sortie de données audio selon une des revendications 1 à 3 ;
- au moins deux sources d'informations différentes (120-126) fournissant des flux de données d'entrée s'interfaçant avec l'au moins une interface d'entrée de données (101) ;
- au moins deux moyens de sortie audio (110, 112) s'interfaçant avec les au moins deux canaux de sortie audio.

5. Système de gestion d'informations (350 ; 450 ; 550) selon la revendication 4, dans lequel les sources d'informations comprennent au moins une parmi
une source d'informations de divertissements, en particulier des dispositifs pour reproduire des signaux audio analogiques ou numériques comprenant un dispositif de télévision, et/ou un dispositif radio (526), et/ou un dispositif de lecture de cassette compacte, et/ou un dispositif de lecture de disque compact (521), et/ou un dispositif de lecture de disque compact super audio, et/ou un dispositif de lecture de disque numérique polyvalent (523), et/ou un dispositif de lecture de couche audio 3 MPEG, et/ou un ordinateur personnel, et/ou une console de jeux et/ou un téléphone (528),
et
une source d'informations de services, en particulier un système de navigation, et/ou un ordinateur embarqué, et/ou au moins un microphone (529), et/ou un dispositif d'assistance électronique au stationnement, et/ou un indicateur de direction, et/ou des dispositifs fournissant des signaux d'avertissement.

6. Système de gestion d'informations (350 ; 450 ; 550) selon l'une quelconque des revendications 4 à 5, dans lequel les moyens de sortie comprennent au moins un haut-parleur (312 ; 412 ; 512) et/ou au moins un casque d'écoute (310 ; 410 ; 510).

7. Système de gestion d'informations (350 ; 450 ; 550) selon la revendication 6, dans lequel l'interface entre le canal de sortie audio (303 ; 403 ; 503) et l'au moins un casque d'écoute (310 ; 410 ; 510) est conçue de manière à permettre une communication sans fil entre le canal de sortie (303 ; 403 ; 503) et le casque d'écoute (310 ; 410 ; 510).

8. Système de gestion d'informations (350 ; 450 ; 550) selon la revendication 6 ou 7, dans lequel l'au moins un casque d'écoute (310 ; 410 ; 510) comprend un circuit en anneau, qui est capable de créer un champ magnétique.

9. Véhicule comprenant le dispositif pour le contrôle de la sortie de données audio/le système de gestion d'informations selon une des revendications 1 à 8.

10. Procédé de contrôle de la sortie de données audio comprenant les étapes suivantes
- la fourniture de flux de données d'entrée à partir d'au moins deux sources d'informations différentes (320-322 ; 420-424 ; 520-526, 528, 529) et d'au moins deux canaux de sortie audio (302, 303 ; 402, 403 ; 502, 503)
- la détermination automatique pour chacun des flux de données d'entrée duquel/desquels des au moins deux canaux de sortie audio fournis (302, 303 ; 402, 403 ; 502, 503) est/sont utilisés, pour délivrer en sortie des informations contenues dans les flux de données d'entrée ;
- le mélange de flux de données audio qui doivent être délivrés en sortie par le biais du même canal de sortie audio (302, 303 ; 402, 403 ; 502, 503) ; et
- avant l'étape de mélange, la pondération de l'amplitude de signaux audio à mélanger, correspondant à chacun des flux de données d'entrée qui doivent être délivrés en sortie par le biais du même canal de sortie audio (302, 303 ; 402, 403 ; 502, 503) ;
**caractérisé par**
- la fourniture d'au moins un des flux de données d'entrée à partir d'au moins un microphone (322 ; 422 ; 529) placé pour recevoir des signaux acoustiques provenant de l'extérieur du véhicule (551) ; et
- le filtrage d'au moins un des flux de données d'entrée provenant de l'au moins un microphone avant l'étape de détermination automatique en fonction d'un critère prédéterminé.

11. Procédé selon la revendication 10, comprenant en outre une étape de connexion d'un casque d'écoute (310 ; 410 ; 510) à un des au moins deux canaux de sortie audio.

12. Procédé selon la revendication 11, dans lequel les informations qui ont été déterminées pour être délivrées en sortie par le casque d'écoute (310 ; 410 ; 510) sont délivrées en sortie en utilisant un circuit en anneau.

13. Procédé selon une des revendications 10 à 12, dans lequel les flux de données d'entrée comprennent des données d'assistance de navigation, et/ou des données d'informations de trafic, et/ou des données de communication, en particulier des appels téléphoniques, des télécopies, et/ou un courrier électronique, et/ou des données provenant d'une électronique de divertissement, en particulier provenant d'un dispositif radio (526), et/ou d'une télévision, et/ou d'un lecteur de CD/DVD (521, 523), et/ou d'un lecteur de cassette compacte, et/ou d'un lecteur MP3, et/ou d'une console de jeux, et/ou d'un ordinateur de bord, et/ou de signaux audio capturés par au moins un microphone (322 ; 422 ; 529).

14. Procédé selon la revendication 13, dans lequel des signaux audio capturés par le microphone sont délivrées en sortie uniquement par le biais du casque d'écoute (310 ; 410 ; 510), en particulier après le filtrage des signaux audio capturés par le microphone (322; 422; 529) en fonction d'un critère prédéterminé.

15. Produit de programme informatique pouvant être directement chargé dans une mémoire interne d'un ordinateur numérique, comprenant des portions de code logiciel pour effectuer les étapes du procédé selon une des revendications 10 à 14.

16. Produit de programme informatique stocké sur un support lisible par un système informatique comprenant des moyens de programmes lisibles par ordinateur pour amener un ordinateur à effectuer les étapes du procédé selon une des revendications 10 à 14.
